# EUROPEAN PATENT APPLICATION

(11) **EP 3 346 299 A1**
(43) Date of publication of application: **11.07.2018**
(21) Application number: 17820621.5
(22) Date of filing: 16.06.2017
(51) Int. Cl.: G01V 3/165

(54) **DATA COLLECTION SYSTEMS FOR MARINE MODIFICATION WITH STREAMER AND RECEIVER MODULE**

(30) Priority: 30.06.2016 RU 2016126358
(71) Applicant: Obshchestvo S Ogranichennoi Otvetstvennostiu "Sibirskaia Geofizicheskaia Kompania", Irkutsk 664001 (RU)
(72) Inventor: AGEENKOV, Evgenii Valerevich, Irkutsk 664058 (RU); ALAEV, Valerii Nikolaevich, Irkutsk 664029 (RU); VLADIMIROV, Viktor Valerevich, Irkutsk 664011 (RU); ZHUGAN, Pavel Petrovich, Irkutsk 664075 (RU); IVANOV, Sergei Aleksandrovich, Irkutsk 664033 (RU); MALTSEV, Sergei Kharlampevich, Irkutsk 664074 (RU); PESTEREV, Ivan Iurevich, Irkutsk 664011 (RU); SITNIKOV, Aleksandr Anatolevich, Irkutsk 664047 (RU)
(74) Representative: Spengler, Robert
(86) International application number: PCT/RU2017/000429
(87) International publication number: WO 2018/004387

(57) **Abstract**

This invention is used to collect data and calculate electromagnetic field transformants - differential-normalized parameters DU, PI, Dcp, Ps, which can be particularly determined by quantitative separation of electromagnetic induction and induced polarization effects, for example, DNME method in marine modification. It is used for comprehensive analysis of data obtained by DNME method in combination with seismic and well logging data. This method relates to electromagnetic geophysical surveying of subsea rock formations. Marine modification is designed to perform geological and engineering geological surveying in shelf zone of seas and oceans. The obtained data can be used, for example, for seabed electromagnetic profiling.

## Description

This invention is used to collect data and calculate electromagnetic field transformants - differential-normalized parameters DU, PI, Dcp and Ps, which can be particularly determined by quantitative separation of electromagnetic induction and induced polarization effects, for example, DNME method in marine modification. It is used for comprehensive analysis of data obtained by DNME method in combination with seismic surveying and well logging data. This method relates to electromagnetic geophysical surveying of subsea rock formations.

Marine modification is designed to perform geological and engineering geological surveying in shelf zone of seas and oceans.

The obtained data can be used, for example, for seabed electromagnetic profiling.

There is known invention "Shallow marine electromagnetic hydrocarbon prospecting", patent RU2394256, NO 20050108, publication WO 2006/073315 dated July 13, 2006, IPC G01V3/12, which defines the oil content based on the electrical resistivity of submarine petroleum fluid-bearing formation using transmitter antennas and several electromagnetic receivers in said sea, receiving signals consisting of one or more square pulses, and then assessing the signal difference. Such electromagnetic prospecting can be used to identify some geological layers with higher or lower resistivity than the surrounding geological formations. However, it is necessary to install a radiating antenna in the sea, which ensures the emission of electromagnetic waves propagating through the sea and geological formations. Oil-bearing formation are detected by small-energy signals in form of electromagnetic waves reflected and refracted from the seabed , which come back to the seabed being identified and measured using antennas arranged downwards by the proposed method. However, this method only determine whether the oil-bearing formation explored during the seismic survey will be oil-bearing and whether it is suitable for determining the horizontal extent of oil reservoir and some of the electrical properties of that oil reservoir. This method does not allow quantitative separation of electromagnetic induction (EM) and induced polarization (IP) effects during the marine electrical exploration, and, therefore, does not allow quantitative determination of electromagnetic induction field and induced DC polarization intensity with accuracy at most 0.5%, and, at the same time, enable a large time interval for field separation from 1 ms to several seconds, including over sections with high conductivity. It does not allow to achieve more information about the deposit electrical properties, unlike the proposed method, it does not allow to more accurately interpret hydrocarbon pools in the reservoir, and also to distinguish their oil and gas content from the barren rocks that usually occur in most near-bottom rocks.

There is known invention "Electromagnetic method in shallow water using a controlled source", patent RU2475781, NO 2007/000044, publication WO 2007/094676 dated August 23, 2007, IPC G01V3/12, wherein electromagnetic transmitter is towed in the sea and electromagnetic sensors are arranged at desired offsets (x) in the sea. This method allows discovering oil-bearing rock formations in geological layers below the seabed.

The rocks below the seabed are saturated with water and contain ions that make the rocks electrically conductive, which therefore have high conductivity or low specific resistivity, from 0.7 to 3 Ω·m. Hydrocarbons in form of oil or gas expel water from the pore spaces of such oil and gas bearing rock layers. However, the necessary requirements for sea depth, which should be sufficient to suppress the air wave, gives additional burden on design of measuring instruments and requires applying of controlled emitting source, and measuring sensors must remain stationary. This method additionally requires that the exploration target must be not too small as compared with depth of occurrence.

There is known invention "Marine electrical exploration of shelf zones", patent RU1805425, publication dated 30.03.1993, IPC G01V1/38, G01V3/06, wherein multi-pole sonde consisting of transmitter and receiver electrodes is towed at near-bottom layer with continuous depth measurement to the seabed, the minimum and maximum spacing are selected depending on the distance from the electrical prospecting station to the basin bottom and the thickness of surveyed formation, the distance to the bottom is measured continuously using depth sensors. Receiving line is linked via antenna floats, tubes filled with air, which length is adjusted under hydrostatic equilibrium, depth sensor and stabilizer are placed at initial and tail sections of receiving line. This method can be used for electrical exploration in shallow-water basins (depths up to 200 m) having monotonous bottom relief. This method enables improving the measurement accuracy, but it is must be adhered the minimum distance equal to ½ electrical probe - bottom spacing, and also the maximum distance equal to the thickness sum of target layer and electrical probe - bottom spacing. This condition is difficult to fulfill, especially when surveying unfamiliar rock deposits below the seabed.

There is known invention "Method for electromagnetic geophysical surveying of subsea rock formations", RU 2397512, NO 20062365, publication WO 2007/136276 dated 29.11.2007, IPCG01V3/17, which applies as towed emitting alternating field from sources, constituting a phased array emitter antenna with directivity for transmitting a major proportion of the combined electromagnetic energy downwards, the fields are merged into total field and measured by receivers (r1, r2, ... rn) of electromagnetic field. The first and second variable fields (E1, E2) of sources (s1, s2) emitted at the first and second depths below the sea surface are used. However, significant section of antenna emitted electromagnetic energy will propagate upward to the sea surface and propagate through the air. Some of upward propagating energy emitted from the antenna will also reflect off the sea surface and obscure the originally emitted signal. Therefore, this method requires several measuring braids located at different depths, which significantly complicates the measurement process, and also requires a stronger electromagnetic signal for propagation down from the radiating antenna.

There is known invention "A method of mapping hydrocarbon reservoirs in shallow waters and also an apparatus for use when practicing the method ", RU2450293, NO 20065436, publication WO 2008/066389 dated 05.06.2008, IPC G01V3/12, wherein current pulses characterized by sharp termination are fed via underwater vertical or horizontally oriented transmitter cable terminated by transmitter electrodes, and obtaining the medium response in pauses between successive current pulses using respectively horizontal or vertical transmitter cable connected to the receiver electrodes. This method determines ά ρ (t), the apparent resistivity of sub-layer for time t. This increases sensitivity to exploration targets containing hydrocarbons, as well as shallow water exploration, and potential electromagnetic prospecting of hydrocarbon reservoirs at small and large depths, including surveying of the reservoir geometry and water saturation of reservoir formations. However, this method applies orthogonal measurement systems using transverse magnetic (TM) waves (TM modes) generated by the electromagnetic field source to record the TM response. However, the proposed method does not apply the transverse-electric (TE) field component, which contributes to the horizontal axial (i.e., directed along the dipole axis) electric field component, which reduces the information content and does not allow quantitative separation of electromagnetic induction (EM) and induced polarization (IP) effects during marine electrical exploration, and also provide large time interval for field separation. In this case, application of orthogonal measurement system in shallow water is problematic, since the vertical orientation of transmitter and receiver cables does not allow reaching significant levels of measured signals. This circumstance limits the depth wherein exploration target can be detected using this method.

There is known invention "Hardware complex for marine electrical exploration of oil and gas fields and method of marine electrical exploration", RU2510052, Publication 03.03.2014, IPC G01V3/08, containing bodily light cable line arranged behind the vessel's stern and equipped with emitting electrodes, ballasting arrangement placed behind the vessel's stern, receiving line with receiver electrodes towed behind the vessel, buoy towed over the surface equipped with additional GPS receivers and radio modems for transmitting coordinates of the receiving line on the vessel board, telemetric measuring modules, depth drawdown and multichannel measuring instrument. This complex enables increasing the amount of information by increasing the main receiving line (SLA) length several times up to 8-15 km, which makes it possible to obtain data about seabed rocks at depth of up to 4-5 km, but the noise level rises sharply. It is used in electrical exploration, and is designed to predict hydrocarbon deposits when probing the seabed at sea depths at most 500 m for electromagnetic parameter alternations of near-bottom rocks and analyzing the data obtained to detect existing anomalies and determine their nature. However, since the seawater electrical resistivity is lower than that of seabed, the signal in water rapidly damps, and as a result, when measuring at distance at most 500 m from the emitting source, without using the differential-normalized parameters DU, P1, Dϕ, Ps, information about the seabed rocks, and in this case - inability to obtain data on the rock polarizability, which significantly reduces the forecast accuracy.

There is known invention "Device for marine electrical exploration in vessel movement and method of marine electrical exploration", RU 2253881, publication dated 10.06.2005, IPC G01V3/02, which contains the excitation field generating unit, ballast arrangement, the first cable line is short at most 100 m and equipped with single emitting electrode located at the end or near the end, the second cable line up to 1000 m long and equipped with at least one emitting electrode located at the end or near the end, multichannel measuring instrument, vessel's echo sounder, Global Position System receiver and signal processing processor, the receiving multi-electrode cable line arranged behind the vessel's stern at deep desired depth from the water surface and equipped with receiver electrodes. Arrangement is designed for seabed probing in the shelf zone. By using this arrangement, hydrocarbon deposits are localized based on studying of electric field making after medium excitation by DC pulses, based on studying of transient processes during the field making in the medium after being exposed to DC pulses. That includes analysis of the curves of field transient during transient phenomena, after processing the curves are presented in the form of a medium model including geoelectrical section (profile). This arrangement increases the reliability (integrity) of survey results, but it is disable to operate at vessel speed from 2 knots to water, and integrity of obtained results is insufficient, since in the shelf deep-water part, due to damping of induced polarization (IP) in highly conductive water column, application of this method is not effective. The method performed with this arrangement does not have sufficient resolution in marine conditions. Resolution is based only on specific form of data visualization measured at one spacing, and does not use any model representations of explored medium.

The closest technical solution to the proposed data collection system is invention "Method and device for carrying out marine electrical exploration during a ship travel", patent RU2425399, publication WO 2008/136700 dated 13.11.2008, IPC G01V3/165, containing excitation field generating unit, ballasting arrangement, the first short cable line at most 100 m and equipped with at least one emitting electrode located at the end or near the end, the second cable line at most 1000 m long and equipped with at least one emitting electrode located at the end or near the end, multi-channel measuring instrument, a ship's echo sounder, Global Position System receiver and signal processing processor, receiving multi-electrode cable line being located at a desired depth from the water surface and equipped with receiver electrodes and additional EMF arising in them. Electric field is measured based on spatial averaging of double layer potential that appears at the electrode-water interface when the vessel moves, on the pairs of receiver sectional electrodes of the receiving multi-channel line. Arrangement is used for seabed probing in the shelf zone. Method and arrangement make it possible to localize the hydrocarbon deposit based on studying of electric field making after medium excitation by DC pulses. Based on studying of transient processes during the field making after medium excitation by DC pulses are analyzed curves of the field making curves during the transient process, which, after processing, are represented as medium model including the geoelectric section.

However, this arrangement does not allow marine geoelectric prospecting with maximum accuracy when the vessel moves, especially when the vessel is moving quickly to 2 knots. This is because the interference occurs on the receiver electrodes due to changing in flowing medium double layer potential arising on the electrode-water boundary during motion. Inability to measure differential-normalized parameters DU, PI, Dcp, Ps does not allow to overcome this drawback, does not allow to increase accuracy and reliability of measurements due to quantitative separation of electromagnetic induction (EM) and induced polarization (IP) effects during marine electrical exploration. So in the subsequent processing of received signal, it is difficult to increase the signal-to-interference ratio, since the frequency domain of useful signal and interference are the same, which must be eliminated. Interference that occurs at the receiver electrodes due to the double layer potential arising at the electrode-water interface and changing under the action of turbulent flows arising from the motion of streamer with electrodes in the water when the ship moves more than 2 knots with respect to water, do not allow to measure intensity of electromagnetic induction fields and induced polarization of direct current with sufficiently small accuracy, and also to provide sufficiently large time interval for field separation.

At the present time, there is a need for high prognosticability when searching for hydrocarbon deposits and significant reduction in commercial costs and environmental risks during marine drilling and detection of available polarizing targets of different nature, such as gas hydrates, ice rocks in engineering geological surveying. To do this, it is necessary to determine the differential-normalized parameters DU, PI, Dcp and Ps, for example, by quantitative separation of electromagnetic induction (EM) and induced polarization (IP) effects achieved particularly by DNME method. In marine version, these surveys are traditionally performed with towed streamer. However, application of this method is not effective under conditions of shelf deep-water part due to IP attenuation in high-conductivity water column. To improve the quality of received measuring data which are material for further analysis in general and developing of system application, it is necessary to determine differential-normalized parameters DU, PI, Dcp and Ps at areas with great depths, which towed measurement system should be developed with recessed electrical prospecting steamer, or at streamer situated near the sea surface, having buoyancy close to neutral. It is also necessary to increase the quality of material as a whole and extend application of DNME measurement method, particularly in areas with great depths. Furthermore, it is required to increase signal / noise ratio by reducing the length of receiving conductors and their distance from power dipole. It is necessary to use the proposed data collection system using the DNME method that may define both section resistivity and polarization features in the deep sea conditions. This is especially important for reducing of drilling costs when comprehensive analysis of data obtained by DNME method combined with seismic and well logging data.

When carrying the electrical exploration operations, the electromagnetic excitation under water by electromagnetic long-wave signals makes difficulties to detect electromagnetic waves under water without additional noise arising from similar radio waves. Since electromagnetic waves have much greater wavelength, and some of these waves propagate down along and upward through geological layers under water. Electromagnetic waves are greatly attenuated in the sea and in the ground due to the rock electrical resistivity or existing salinity in varying degrees, so it is also necessary to receive the response from the geological environment determining the rock electrical resistivity. Attenuation is the strongest at high frequencies, so it is necessary at short intervals to be able to quantify separation of electromagnetic induction (EM) and induced polarization (IP) effects.

Known measuring methods apply electromagnetic source and very sensitive receiver, when signal at low frequency passing through seawater and the ground may be detected by receiver. However, typically seabed sediment layers may form overlying rocks above deeply buried porous geological layer being prospective hydrocarbon reservoir. Then some electromagnetic waves are reflected by prospective hydrocarbon reservoir, and some waves can be refracted along the prospective hydrocarbon reservoir.

Claim solved by this invention is to eliminate or at least reduce these disadvantages of methods and arrangement known in the prior art.

Technical result of proposed data collection system is that the system enables:
- potential quantitative separation of electromagnetic induction (EM) and induced polarization (IP) effects during marine electrical exploration;
- operability of the data collection system and receipt of conditioned material in aquatic areas;
- operability of the data acquisition system at the vessel speed of 2 knots relative to the water.

This technical result is achieved due to the fact that the data acquisition system determines differential normalized parameters DU, P1, Dϕ, Ps, for example, using DNME method and apply for marine modification. The system is equipped with ballasting arrangement and comprises: electrical prospecting streamer consisting of several sections - generating section of power coaxial cable having at least one source electrode, receiving section having at least three receiver electrodes placed at least in one measurement line from the ADC, and navigational section with terminal arrangement having positioning system and apparatus, transmitting data to the vessel. The system is new, since it is characterized by the generating section of electric survey streamer being made using the power coaxial cable with negative or neutral buoyancy, and having at least one transmitter electrode at the vessel distal end of generating section, and at least second source electrode, placed near the vessel. Thus, at the vessel distal end of generating section is additionally mounted depressor with adjustable weight from zero to the maximum design value while depressor makes deflection of measuring part of electric exploration streamer; Receiving section of exploration streamer is configured with zero buoyancy cable, has rectilinear section and at least three receiver electrodes placed on the straight part of the receiving section; Receiving section is additionally equipped with at least one depth sensor and/or at least one acoustic sensor having position control of receiver electrodes. Arrangement is equipped with the positioning system, and apparatus that transmits the data to the vessel being designed as measuring module. Wherein the streamer's receiving section is additionally equipped with end depressor having adjustable weight from zero to the maximum design value calculated as the distal from the generating section and the end depressor of streamer's receiving section having at least one hydrodynamic tensioner ensuring straightness of electrical prospecting streamer's receiving section. Navigating section of the system electrical prospecting streamer is formed as the distal receiving section end from the generating section, tethered to high-strength fiber halyard with towed pick-up buoy and/or penetration stabilizer. The system electromagnetic prospecting streamer has the calculated configuration, depending on calculated towing speed, length and weight of electrical prospecting streamer.

The system may be made in various completions. Thus the system may be used with two or more measuring lines, if necessary, as well as slightly submersed streamer at 50-100 m, i.e. close to neutral buoyancy taking into account sea surface disturbance. The system may also be connected or is connected with generating section mechanically. Therefore, in particular case, the generating section at the data acquisition system, namely generating electrical prospecting streamer section may be formed using coaxial power cable with negative buoyancy or with zero (neutral) buoyancy.

In this regard, the cable negative buoyancy for submerged, distal from the vessel after generating section end may be installed depressor, and distal receiving section end from the generating section is mounted end depressor, each of which has adjustable weight calculated depending on the required immersion depth of selected electrical prospecting streamer;

When using cable with zero (neutral) buoyancy may be set depressor at the vessel distal end of generating section, and at the distal end of generating section is mounted end depressor, each of which has adjustable weight providing electrical prospecting streamer location on the surface.

In particular case, second transmitter electrode is submerged as separate cable. It can also be mounted on separate cable at most 50 meters long.

Measuring module can be configured as submersible and sealed, and meters, ADC and receiving apparatus of measuring module arranged at the distal receiving section end from the generating section. In this case, the measuring module transmits data to the computer placed on the shipboard via fiber optic lines in real time.

End depressor of electrical prospecting streamer receiving section may be mounted after (behind) submersible sealed measuring module.

In particular case ADC and multi-channel receiving equipment of measuring module are mounted on the shipboard. There may be various combinations for measuring module placement. One part of measuring module with ADC and receiving equipment can be placed on the shipboard, while the other part of measuring module with receiver electrodes and sensors will be placed at the end of receiving section of system electrical prospecting streamer.

It may also be placed tensioner, which is located after (behind) the end depressor of electrical prospecting streamer receiving section, which in particular case is made as hydrodynamic.

Also, high-strength synthetic halyard of navigating section can be formed with towed pick-up buoy. Towed pick-up buoy may comprise power supply unit, satellite navigation system (GPS) and radio modem. Power supply unit, satellite navigation system (GPS or GLONASS)) and radio modem may be mounted on the buoy in airtight container and thus enable data transfer on the shipboard. The buoy can also be made as streamlined shape with stabilizing fines.

Winch may be mounted on buoy to improve penetration adjustment due to length change of navigating section of electrical prospecting streamer.

For more stable system operation, high-strength synthetic halyard of navigating section can be configured with penetration stabilizer.

In case of using two or more measuring lines, the receiving section has at least three receiver electrodes mounted on the first measuring line, and at least three receiver electrodes mounted on each of the second measuring line.

The system electrical prospecting streamer is calculated before its launching based on mathematical modeling, using calculated generating section length, depressor weight, hydrodynamic tensioner power and navigating section length.

The proposed technical solution is illustrated in Drawing, which does not reflect all possible embodiments, but demonstrates the system operation.

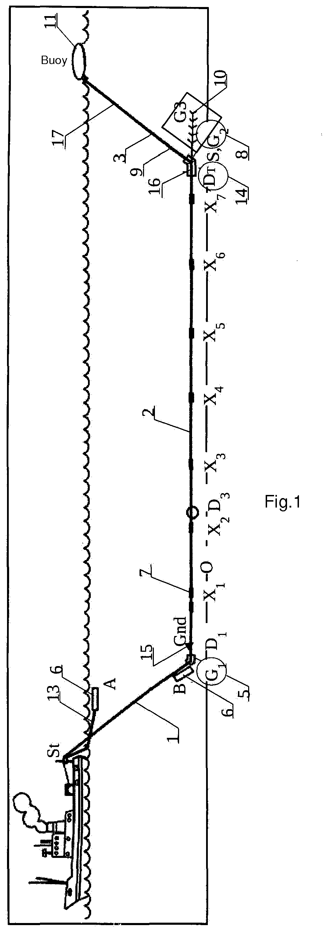

Figure 1 - shows electrical prospecting streamer diagram

In preferred embodiment, the proposed arrangement is implemented as follows.

Electrical prospecting streamer consists of generating (1), receiving (2) and navigating (3) sections. Towed system can operate at vessel speed from 2 to 4.5 knots relative to the water.

Streamer configuration is calculated to achieve specific towing depth taking into account water depth and towing conditions. These depths may reach in the shelf zone up to 700 m or more.

Towed system of electrical prospecting streamer includes:
- Streamer's generating (01) section having power coaxial cable with negative buoyancy;
- Ballasting arrangement (4);
- Depressor (5) of generating section;
- Transmitter electrodes (6);
- Receiving section (2) having cable with neutral buoyancy;
- Receiver electrodes (7);
- End depressor (8) of streamer's receiving section (2);
- Submersible module (9) from ADC (not shown for clarity);
- Set of hydrodynamic tensioners (10);
- Navigating section (3) having high-strength synthetic rope;
- Pick-up buoy (11) with positioning system and radio modem that transmits data to the ship.

To improve material quality as a whole, determine differential-normalized parameters DU, P1, Dϕ, Ps, and extend application, e.g., DNME method in areas with great depths has been developed towed system with recessed streamer.

Transmitter electrode (6) is arranged in generating section (1). All three receiver electrodes are arranged on one measuring line (12) from ADC. Generating section (1) of system electrical prospecting streamer is configured in preferred embodiment using power coaxial cable with negative buoyancy. First transmitter electrode (6) placed at the vessel distal end of generating section (1) and second transmitter electrode B (6), placed near the vessel. Thus, at the vessel distal end of generating section (1) is additionally mounted depressor G₁ (5) with adjustable weight from zero to the maximum design value while depressor makes deflection of measuring part (2) of electric exploration streamer. Weight of depressor (5), pre-calculated in the mathematical modeling depending on the required immersion depth of selected electrical prospecting streamer.

End depressor G₂ (8) is mounted at the distal receiving section (2) end from the generating section (1). Weight of end depressor (8) is also pre-calculated in the mathematical modeling depending on the required immersion depth of selected electrical prospecting streamer. They form together the straightness of streamer section G₁-G₂.

Transmitter electrode (6) is submerged in separate cable. It is mounted on separate cable (13) with length of at least 50 meters.

Receiving section (2) of the system electrical prospecting streamer is made using cable with zero buoyancy, has straight part G₁-G₂ and at least three receiver electrodes X1, X2, ... Xn (7) arranged on the straight part G₁-G₂ of receiving section (2); Receiving section has additionally mounted depth sensors Dₜ (14), acoustic sensors D_{d} (15) which control position of receiver electrodes (7).. Arrangement, equipped with the positioning system and apparatus transmitting the data on the vessel is designed as measuring module S (16). Measuring module (16) is made sealed and submersible. Multichannel meter, ADC and receiving apparatus, of measuring module (16) are mounted at the distal receiving section (2) end from the generating section (1). In this case, measuring module (16) transmits data to the computer placed on the shipboard via fiber optic lines in real time. End depressor G₂ (8) is mounted on receiving section (2) end with adjustable weight from zero to maximum design value and placed at the distal streamer end from the generating section (1). End depressor (8) of the streamer receiving section (2) has hydrodynamic tensioner G₃ (10), ensuring the straightness of electrical prospecting streamer's receiving section (2). End depressor (8) of the receiving section (2) may be located behind the sealed submersible measuring module (16). Tensioner (10) is located behind the end depressor (8) of the streamer receiving section (2).

Navigating section (3) of the system electrical prospecting streamer is formed as the distal receiving section (1) from the generating section (2) tethered to high-strength fiber halyard (17) with towed pick-up buoy (11). Buoy (11) may be equipped with penetration stabilizer. Pick-up buoy (11) is towed by synthetic high-strength halyard (17) of navigating section (3). Towed pick-up buoy (11) comprises power supply unit, satellite navigation system (GPS) and radio modem. Power supply unit, satellite navigation system (GPS or GLONASS) and radio modem are mounted on the buoy in airtight container. The navigation system via modem provides data transmission on the shipboard. Buoy (11) can also be made as streamlined shape with stabilizing fines to reduce hydrodynamic component. Winch is mounted on buoy (11) to improve penetration adjustment due to length change of navigating section. For more stable system operation, high-strength synthetic halyard (17) can be configured with penetration stabilizer.

In areas with shallow depths, towed system could operate with streamer, placed near the sea surface, which does not reduce the material quality in general and also allows expanding the use of DNME method. In context of this claim, the streamer at near-surface position means streamer with neutral or neutral buoyancy when it is completely hidden under water and stored near the sea surface, i.e. not submersed. For example, depth of 50-100 m may be considered. However, submersed streamers are most often used in sea areas at depth of more than 700 m. The maximum depth is determined based on available depth - water electrical resistance dependency. Furthermore, pressure sensors are mounted to control the streamer position.

Furthermore, receiving and generating sections, combined into measuring lines, may be several.

The concept of electrical prospecting streamer is applied as a broader concept in relation to the measuring line. Thus, the streamer assumes that sections, e.g., generating and/or measuring, but the streamer may also consist only of the receiving section or only from the generating section or only from the navigating section.

The data acquisition system runs as follows.

The generating section (1) to 1000 meters long attached at one end to the towing vessel and the other end attached to the distal submersed electrode (B) (6). The nearest electrode (A) (6) to the vessel is submersed at short cable (13) at least 50 meters long.

At the end of cable generating section (1) is mounted depressor (G1) (5) with adjustable weights enabling the streamer "deflection". Receiver electrodes (X1, X2, ... Xn) (7), as well as depth sensors Dₜ (14) and acoustic sensors D_{d} (15) (denoted as D1, D2, ... Dn in Figure), enabling to control position of measuring electrodes in the section G₁-G₂, are mounted on the streamer receiving section (2).

Pressurized receiving module S (16) with receiver transmitting data on the shipboard via fiber optic lines in real time in mounted at the streamer receiving section (2) end.

End depressor (G₂) (5) and hydrodynamic tensioner (G₃) (10), ensuring the straightness of streamer's receiving section, are mounted after the receiving module S (16).

End depressor (8) is attached to the towed buoy (11) by halyard (17) made of high-strength synthetic fiber. Buoy (11) has streamlined shape with stabilizing fines. Airtight container with power supply unit, satellite navigation system (GPS) and radio modem for transmitting data on the shipboard are mounted on the buoy (11). Winch is mounted on the towed buoy to improve penetration adjustment due to G₂ - Y length change of navigating section.

Feeding and scanning of acoustic pressure sensors D_{d} (15), as well as feeding of submersible receiving module S (16) are made in such a way that they are fed only during the signal excitation in the AB line. Interferences are eliminated by the fact that at the time of measurement, all electrical circuits of sensors and modules are deactivated, achieving the exception of their effect on receiver electrodes X1, X2, ... Xn (7).

Telemetry system transmits data on the shipboard in real time. Acoustic responder beacons can also be mounted to improve the streamer positioning accuracy when operated without pick-up buoy under ice fields or at great depths.

Mathematical modeling is completed, as well as the seawater system configuration, towing speed is determined, before the electrical prospecting streamer launching. It is calculated generating section length, head and end depressor weight, hydrodynamic tensioner power and navigating section length.

Transient processes may be registered by receiving module S (16) disposed partly on the shipboard, and partly on the streamer itself. The receiving module converts the analog signal into digital and transmits it via fiber optic lines on the shipboard. Its placing on the streamer in underwater module enable increasing the signal/noise ratio by reducing the length of receiving conductors, and removing them from the power dipole A-B. Station batteries are recharged within the intervals between measurements, which eliminates interference induction via power wires.

Applying of the streamer positioning system can reliably determine the position of receiver and transmitter electrodes due to the fact that the feeding of signal excitation in the AB line and sensor scanning are aligned with off/on power mode and that also eliminates interference induction to useful signal.

Applying of winch that adjusts the streamer navigating section length can quickly adjust the streamer towing depth within certain time limits.

The main difference from other shelf zone electric prospecting methods is potential quantitative separation of electromagnetic induction (EM) and induced polarization (IP) effects. For example, quantitative separation method is described in patent RU2399931, same authors, publication dated 20.09.2010 in Bulletin No 26. When measuring conductivity of platforms having large thickness of sedimentary cover, electromagnetic waves decay slowly because of large (hundreds of thousands of Siemens) conductivity of sedimentary cover. Therefore, applying of this measurement method (DNME method) enables the quantitative determination of electromagnetic induction field intensity and induced polarization of direct current with small accuracy, and provide large time interval for field separation from 1 ms to several seconds, including over the sections with high conductivity. Integration of DNME with seismic surveying and logging data usage can achieve high prognosticability when searching for hydrocarbon deposits and substantially reduce commercial costs and environmental risks during marine drilling in shelf zone of seas and oceans.

The proposed arrangement may apply in marine electrical exploration to study reservoir geometry, their capacity and water saturation of reservoir formations included in shelf zones. During marine operations by DNME method, e signal is recorded continuously while the ship is moving along the straight profile lines. Signal recordings during the continuous ship motion are accumulated for about 3 km long profile section. Then, the data in these sections are summed and field curves of parameters DU, PI, Dcp and Ps are formed at each physical observation point matching the section center. Further, during the data inversion based on the selection of field and model curves with accuracy at least of certain value, polarizability coefficient η is determined at each physical observation point within selected geoelectric layers of geoelectric shelf rocks. This enables to determine dependence by applying various methods and based on quantitative features of hydrocarbon deposits, which further established functional relationship with the parameter η, examine and analyze parameters of effective capacitance (q - oilfield parameter is determined based on logging and core) and the total amount of gas (TG - geochemical parameter is determined based on gas surveying).

For example, the proposed data collection system used to make geoelectric model for the northern water area of the Caspian Sea. So, when carrying out surveys in the Caspian Sea, applying of improved data acquisition system enabled to complete work and obtain conditioned material in sea areas at depth of more than 700 m.

## Claims

1. The data collection system for the marine modification is equipped with ballasting arrangement and includes electrical prospecting streamer consisting of several sections: generating section of power coaxial cable having at least one source electrode, receiving section having at least three receiver electrodes placed at least in one measurement line from the ADC, and navigational section with terminal arrangement having positioning system and apparatus, transmitting data to the vessel, **characterized in that** the generating section of electric survey streamer being made using the power coaxial cable with negative or neutral buoyancy, and having at least one transmitter electrode at the vessel distal end of generating section, and at least second source electrode, placed near the vessel, at the vessel distal end of generating section is additionally mounted depressor with adjustable weight from zero to the maximum design value while depressor makes deflection of measuring part of electrical exploration streamer; receiving section of the system electrical prospecting streamer is made using cable with zero buoyancy, has straight part and at least three receiver electrodes arranged on the straight part of receiving section; receiving section is additionally equipped with at least one depth sensor and/or at least one acoustic sensor having position control of receiver electrodes; arrangement, equipped with the positioning system and apparatus transmitting the data on the vessel is designed as measuring module, the streamer's receiving section is additionally equipped with end depressor having adjustable weight from zero to the maximum design value calculated as the distal from the generating section and the end depressor of streamer's receiving section having at least one hydrodynamic tensioner ensuring straightness of electroprospecting streamer's receiving section; navigating section of the system electrical prospecting streamer is formed as the distal receiving section end from the generating section, tethered to high-strength fiber halyard with towed pick-up buoy and/or penetration stabilizer; the system electromagnetic prospecting streamer has the calculated configuration, depending on calculated towing speed, length and weight of electrical prospecting streamer.

2. The data acquisition system according to claim 1 is **characterized in that** the generating section of the system electrical prospecting streamer is configured using power coaxial cable with negative buoyancy;

3. The data acquisition system according to claim 2 is **characterized in that** at submerged, distal from the vessel after generating section end is mounted depressor, and at distal receiving section end from the generating section is mounted end depressor, each of which has adjustable weight calculated depending on the required immersion depth of selected electrical prospecting streamer;

4. The data acquisition system according to claim 1 is **characterized in that** the generating section of the system electrical prospecting streamer is configured using power coaxial cable with neutral buoyancy;

5. The data acquisition system according to claim 4 is **characterized in that** the depressor is mounted at the vessel distal end of generating section, and at the distal end of generating portion is mounted end depressor, each of which has adjustable weight providing electrical prospecting streamer location on the surface;

6. The data acquisition system according to claim 1 is **characterized in that** the second transmitter electrode is submerged as separate cable;

7. The data acquisition system according to claim 6 is **characterized in that** the second transmitter electrode is located as separate cable at least 50 meters long;

8. The data acquisition system according to claim 1 is **characterized in that** the measuring module is configured as submersible and sealed, and meters, ADC and receiving apparatus of measuring module arranged at the distal receiving section end from the generating section, while the measuring module transmits data to the computer placed on the shipboard via fiber optic lines in real time;

9. The data acquisition system according to claim 8 is **characterized in that** the end depressor of electrical prospecting streamer receiving section is mounted after (behind) submersible sealed measuring module;

10. The data acquisition system according to claim 1 is **characterized in that** the meteres, ADC and receiving equipment of measuring module are mounted on the shipboard;

11. The data acquisition system according to claim 1 is **characterized in that** the measuring module with ADC is placed either on the shipboard or at the streamer receiving section end or on the shipboard and at the streamer receiving section end;

12. The data acquisition system according to claim 1 is **characterized in that** the tensioner is located after (behind) the end depressor of electrical prospecting streamer receiving section and made as hydrodynamic;

13. The data acquisition system according to claim 1 is **characterized in that** the high-strength synthetic halyard of navigating section can be formed with towed pick-up buoy;

14. The data acquisition system according to claim 13 is **characterized in that** the towed pick-up buoy may comprise power supply unit, satellite navigation system (GPS) and radio modem;

15. The data acquisition system according to claim 13 is **characterized in that** the power supply unit, satellite navigation system and radio modem are mounted on the buoy in airtight container and thus enable data transfer on the shipboard;

16. The data acquisition system according to claim 13 is **characterized in that** the buoy is made as streamlined shape with stabilizing fines;

17. The data acquisition system according to claim 13 is **characterized in that** the winch is mounted on buoy to improve penetration adjustment due to length change of navigating section of electrical prospecting streamer;

18. The data acquisition system according to claim 1 is **characterized in that** the high-strength synthetic halyard of navigating section is configured with penetration stabilizer;

19. The data acquisition system according to claim 1 is **characterized in that** the system electrical prospecting streamer is calculated before its launching based on mathematical modeling, using calculated generating section length, depressor weight, hydrodynamic tensioner power and navigating section length.

20. The data acquisition system according to claim 1 is **characterized in that** the receiving section has at least three receiver electrodes mounted on the first measuring line, and at least three receiver electrodes mounted on each of the second measuring line.

21. The data acquisition system according to claim 1 is **characterized in that** the data acquisition system is made using separation of electromagnetic induction and induced polarization effects for marine modification.
